Europäisches Patentamt

European Patent Office

Office européen des brevets

(11) Publication number: **0 087 949**
**B1**

(12) **EUROPEAN PATENT SPECIFICATION**

(45) Date of publication of patent specification: **23.09.87**

(21) Application number: **83301006.9**

(22) Date of filing: **25.02.83**

(51) Int. Cl.⁴: **G 06 F 3/03,** G 06 F 3/037, G 05 B 19/42

(54) Method and apparatus for creating numerical control data.

(30) Priority: **27.02.82 JP 31618/82**

(43) Date of publication of application:
**07.09.83 Bulletin 83/36**

(45) Publication of the grant of the patent:
**23.09.87 Bulletin 87/39**

(84) Designated Contracting States:
**CH DE FR GB LI**

(56) References cited:
**GB-A-2 054 199**
**US-A-4 042 866**
**US-A-4 206 314**

**COMPUTER DESIGN, vol. 12, no. 5, May 1973, page 46, Concord, USA, "Computer converts sketches into completed drawings"**
**IBM TECHNICAL DISCLOSURE BULLETIN, vol. 18, no. 5, October 1975, pages 1589-1592, New York, USA, P.L. GARDNER et al.: "Paper menus and keyboards for digitizing tablets"**

(73) Proprietor: **FANUC LTD**
**3580, Shibokusa Aza-Komanba Oshino-mura Minamitsuru-gun Yamanashi 401-05 (JP)**

(72) Inventor: **Hajimu, Kishi**
**Hinohirayamadai-Jutaku 1104**
**6-7-8, Asahigaoka Hino-shi, Tokyo (JP)**
Inventor: **Masaki, Seki**
**3-15-2-406, Takaidonishi Suginami-ku Tokyo (JP)**
Inventor: **Kunio, Tanaka**
**Nishihachioji-Haitsu C-7-9, 711 Sandahigashi-cho**
**Hachioji-shi Tokyo (JP)**

(74) Representative: **Billington, Lawrence Emlyn et al**
**HASELTINE LAKE & CO Hazlitt House 28 Southampton Buildings Chancery Lane London WC2A 1AT (GB)**

Courier Press, Leamington Spa, England.

EP 0 087 949 B1

**Description**

This invention relates to a system for creating numerical control data.

A numerically controlled machine tool (hereafter referred to as an NC machine tool) is operated in a manner specified by a machining program stored on an NC tape to subject a workpiece to prescribed machining. To create an NC tape for a cutting operation, numerical control information and other machining conditions are punched into a paper tape in accordance with predetermined rules. The numerical control information includes all the data necessary for machining, such as numerical values obtained from a design drawing and relating to the dimensions of the workpiece that is to be machined, feed speed, and the like. When machining the workpiece by means of an NC machine tool the NC tape which has been prepared is fed into the tape reader of a numerical control device so that the various instructions recorded on the NC tape may be read successively, the numerical control device responding by executing the read instructions to cause the machine tool to machine the workpiece as prescribed. Since considerable time and experience is required to create the information stored on an NC tape, an apparatus for preparing an NC tape automatically has recently been developed and put into practical use. The apparatus includes a graphic display, keyboard and printer and is extremely useful in preparing NC tapes in a simple, accurate and rapid manner. Consisting of a microcomputer, the apparatus for automatic preparation of an NC tape has an internal main memory for storing the NC tape preparation software, or system program.

To create a machining program by means of the above-described apparatus, the prescribed system program is loaded into the main memory, and a so-called "part program" consisting of a group of data specifying the contour of a part, namely the path of a tool for cutting the contour, must be created and entered in accordance with predetermined rules. If the machining to be performed is, say, a milling operation, the group of data constituting the part program will comprise (a) graphic data indicative of the shape of a part, consisting of tool diameter data, part surface data specifying the axis along which the tool is to be transported, drive surface data specifying motion in the direction of tool diameter when the tool is transported, and stop surface data specifying how far the tool may be moved when the tool is transported along both the part surface and drive surface, and (b) command data for tool motion, consisting of positioning data for positioning the tool at a point where motion on the contour of a part is to start, and data commanding motion along the contour. When the part program has been entered into the apparatus for automatic NC tape preparation, the latter creates the machining program automatically under the control of the system program, stores the machining program in the main memory, and then prepares an NC tape by punching the information into a paper tape.

Thus, with the apparatus for automatic NC tape preparation, a desired NC tape can be prepared merely by entering the part program. The advantage of the apparatus is that even an NC tape containing a program for a highly sophisticated shape can be prepared in a short period of time in a simple and accurate manner.

While the above-described apparatus facilitates the preparation of an NC tape, it is still necessary for a programmer to create the part program at his desk from a design drawing while abiding by predetermined rules. The creation of a part program in such fashion is both a troublesome and time-consuming task and can only be accomplished by a programmer having considerable programming skill. In addition, though the apparatus can create an NC tape for a sophisticated shape in an accurate manner, certain types of NC machining operations for the fabrication of gloves, leather shoes, wood crafts and the like do not require that much precision. It would be convenient if an NC tape for such machining operations could be created in a simple and rapid manner by an individual not possessing special programming skill.

The prior art document US—A—4 042 866 concerns a method and apparatus for creating numerical control data by entering points from a drawing placed on a tablet. In accordance with this document coordinate values of the points are entered by designating said points on the drawing, information is entered specifying the classification of the numerical control data to be created and the numerical control data is then created using said information and the coordinates of said points. Moreover, the prior art COMPUTER DESIGN, vol. 12, No. 5, May 1973, page 46, Concord, USA "Computer converts sketches into completed drawings" discloses that graphic data is entered using a drawing placed on a tablet. The steps of entering the data comprise entering coordinate values of the points using input means on the tablet, and entering information specifying the outline to be generated from said point information. The article "Paper menues and keyboards for digitizing tablets" in IBM TDB, vol. 18, No. 5, October 1975, pages 1589—1592 by P. L. Gardner et al discloses the idea of providing a switch function zone at any location on a tablet and then designating a predetermined area of the zone by coordinate distinguishing means.

According to one aspect of the present invention there is provided a method of creating numerical control data involving the input of graphic data using a digitising tablet and involving the input of mode information, the numerical control data being created by using said mode information and said graphic data, characterised by the steps of:

(a) placing a drawing on said tablet;

(b) designating points on said drawing and generating, and entering, the coordinate values of said points together with signals indicating that the coordinates of said points have been entered;

(c) designating a predetermined switch function area of any location on said tablet;

(d) generating and entering mode information by means of said area specifying particular subsets of numerical control data to be provided from a sequence of the coordinate values; and

(e) creating said numerical control data from said mode information and said coordinate values entered, wherein said signals are employed to store said coordinate values by:

(f) taking the logical sum of said signals to produce output pulses;

(g) counting said output pulses;

(h) sequentially entering and storing said coordinate values in accordance with the counted value; and (i) storing said numerical control data created.

According to another aspect of the present invention there is provided an apparatus for creating numerical control data according to the method of the preceding paragraph, comprising:

(a) tablet means for placing a drawing thereon and means for inputting mode information; characterised by:

(b) coordinate designating means associated with said tablet means for designating points on said drawing, said coordinate designating means including switch means for generating and entering signals indicating that the coordinate values of said points have been entered;

(c) means laid on the tablet and providing a switch function area associated with said coordinate designating means for generating and entering mode information specifying particular subsets of control data to be provided from a sequence of the coordinate values of said points;

(d) processor means to receive said mode information and the coordinate values of said points and said signals for creating said numerical control data from the same,

(e) logical gate means for forming the logical sum of said signals to produce output pulses;

(f) counting means for counting said output pulses and having its status changed with each of its counted pulses;

(g) a plurality of storage means for storing said coordinate values sequentially in accordance with the counted value of said counting means;

(h) coordinate value entering means for entering said coordinate values sequentially in said plurality of storage means; and

(i) data memory means for storing said numerical control data created.

Our EP—A—0087948 (83301005.1) contains similar material to the present case but discloses and claims a method and apparatus for creating part program data, whereas the present case concentrates on the creation of numerical control data.

An embodiment of the present invention may provide a method and apparatus for creating NC data in a simple and rapid manner without requiring special skills.

An embodiment of the present invention may provide a method and apparatus for creating NC data, well-suited to the creation of data that does not require a high level of precision.

An embodiment of the present invention may provide a method and apparatus for creating NC data based on dimensional and positional data which can be entered merely by designating desired points on a design drawing, even if dimensions and the like are not written out on the drawing.

An embodiment of the present invention may provide a method and apparatus for creating NC data wherein creation of a part program is unnecessary.

These and other features may be attained whilst providing a method and apparatus for creating numerical control data by entering coordinates which specify points on a drawing placed on a tablet. The method includes entering coordinate values of points on the drawing by designating the points, and entering information for specifying the category of numerical control data to be specified. Numerical control data is created using the classification information and the coordinates of the points. The data can be created simply in a short period of time without requiring special skills.

Other features and advantages of an embodiment of the present invention will be apparent from the following descriptions taken in conjunction with the accompanying drawings, in which like reference characters designate the same or similar parts throughout the figures thereof.

Brief description of the drawings

Fig. 1 is a perspective view showing the general features of a system for entering coordinates which is useful in describing the present invention;

Fig. 2 is a schematic view showing the external appearance of a tablet input device included in the system of Fig. 1;

Fig. 3 is an enlarged, top view of a cursor unit included in the system of Fig. 1;

Fig. 4 is a flowchart for describing, in general terms, the creation of numerical control data in accordance with the present invention;

Figs. 5 and 6 are plan views showing examples of displays presented on the CRT of a graphic display device included in the system of Fig. 1;

Figs. 7A and 7B are plan views of a tablet and drawing which are useful in describing an operation for setting a switch function zone;

Figs. 8A through 8C are illustrative views of menues for designating the size of a switch function zone as well as the boundaries of areas which constitute the switch function zone;

Figs. 9 and 10 are plan views for describing the center of a scale;

3

Fig. 11 is a plan view for describing the setting of a reduction ratio;

Fig. 12 is a plan view showing another example of a display presented on the CRT of the graphic display device included in the system of Fig. 1;

Fig. 13 is an illustrative view showing the details of a menu depicted in Fig. 8;

Figs. 14 and 15 are diagram useful in describing numerical control graphic data created in a point mode of operation;

Figs. 16, 17, and 18 are diagrams useful in describing numerical control graphic data created in a cutting mode of operation;

Fig. 19 is a block diagram of an apparatus for creating numerical control data according to the present invention; and

Figs. 20A through 20C are illustrative views showing examples of figures which can be drawn out based on numerical control data created in accordance with the present invention.

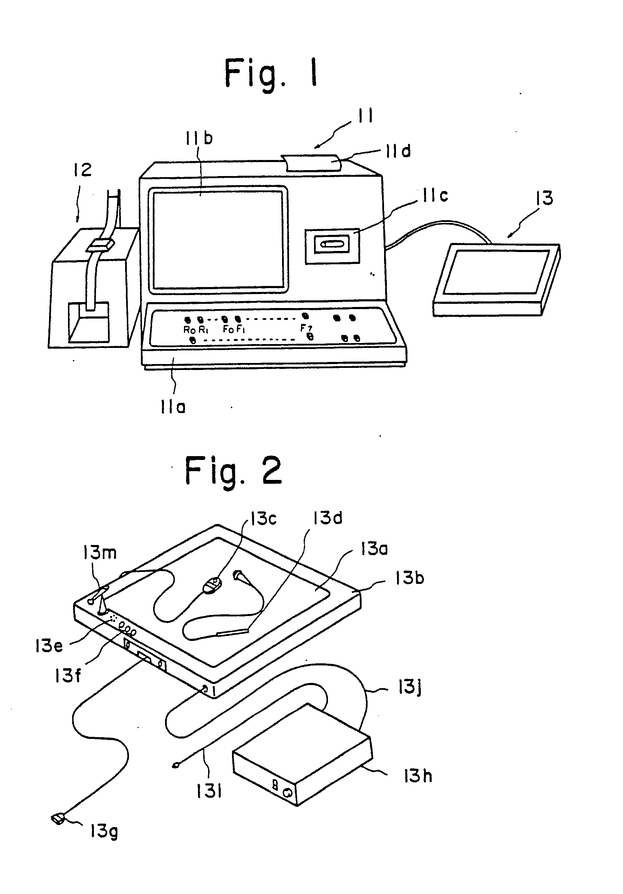

Reference will now be had to Fig. 1 showing the general features of a coordinate input system which is useful in describing the present invention. The system includes the main body 11 of an apparatus for creating NC data. The main body 11 comprises a keyboard 11a having a multiplicity of keys, a graphic display device 11b, a magnetic tape unit 11c for loading a magnetic tape cassette, a printer 11d, and a control unit, not shown. The latter is constituted by a microcomputer which executes processing for the input and output of information, for digitizing and for the creation of NC data, all executed by means of a tablet described hereinbelow, based on a system program stored previously in memory means such as a ROM (read-only memory). The multiplicity of keys provided on the keyboard 11a are for responding to prompts which appear on the system CRT, for designating system program loading, and for entering NC data. The graphic display device 11b displays, in graphical form, coordinate values obtained by digitization of positions designated by the tablet, as well as input data, numerical values, NC data and various messages or prompts for conversational interaction with the operator. The magnetic tape unit 11c is used to enter a system program into the main body of the NC data creating apparatus 11. By way of example, when using a tablet to enter coordinate values directly from a drawing and prepare NC data, the software (system program) for digitizing processing must be fed into the main body 11. This is done by selecting the magnetic tape cassettte containing the digitizing program, and loading the cassette into the magnetic tape unit 11c. To read the tape into the system, the operator need only touch a load button on the keyboard 11a after the cassette has been set in the tape unit 11c. The printer 11d is adapted to print out characters which appear on the screen of the graphic display device 11b, data punched in a paper tape, described later, and information which has been written into the loaded magnetic tape.

The system also includes a paper tape reader/puncher 12 for preparing an NC tape by punching a paper tape with perforations indicative of the NC data prepared by main body 11, and for reading NC or other data which has already been punched into an NC tape. The system tablet, designated at 13, comprises a board which uses the principle of electromagnetic induction to enter data. By relying upon a coordinate designating device such as a cursor unit or stylus pen as means for designating coordinates, the tablet 13 is operable to input positional coordinates from a drawing laid on the tablet surface, these coordinates being fed into the main body 11 as an input thereto.

The perspective view of Fig. 2 shows the external appearance of the tablet 13 in greater detail. The tablet 13 comprises a tablet main body or board 13a, a tablet cover 13b, a cursor unit 13c serving as the coordinate designating device, a stylus pen 13d, a buzzer 13e, a group of lamps 13f indicating, e.g., coordinate input mode and introduction of power, an input/output connector for connecting the tablet 13 to the main body 11, a power unit 13h for supplying the table body 13a with D.C. power, an A.C. cable 13i for connecting the power unit 13h to an A.C. source, a D.C. cable 13j for the connection between the tablet body and power unit, and a pen stand 13m for holding the stylus pen 13 when not in use. The cursor unit 13c or stylus pen 13d is used to enter coordinate and other data.

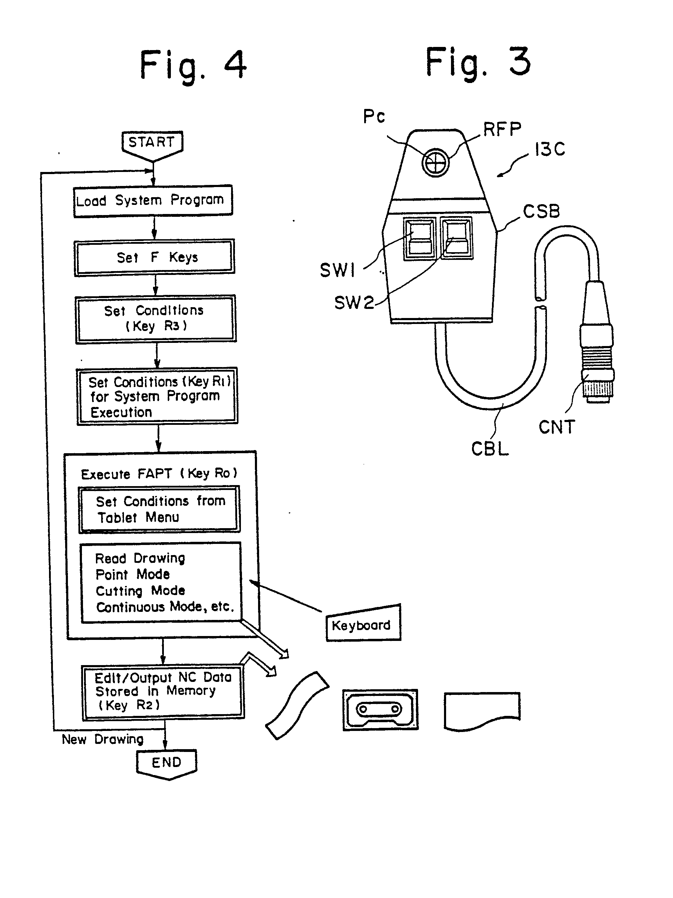

The details of the cursor unit 13c are illustrated in the enlarged view of Fig. 3, in which a top view of the cursor unit is shown. The cursor unit 13c has a main body CSB, first and second switches SW1, SW2, a position reader PR having a cross-hair arrangement, a connector CNT and a cable CBL leading from the connector CNT to the main body CSB. To enter the coordinates of a point, the intersection Pc of the cross hairs provided on the positions reader PR is aligned with the desired point on a drawing laid on the tablet body, followed by depressing the first switch SW1 or second switch SW2.

A flowchart for describing how NC data is created in accordance with the present invention is depicted in Fig. 4. The procedure may be broadly classified into operations of preprocessing, data input, NC data editing and data output. Reference will now be had to Fig. 4 to describe the general features of NC data creation and output.

(1) System loading step

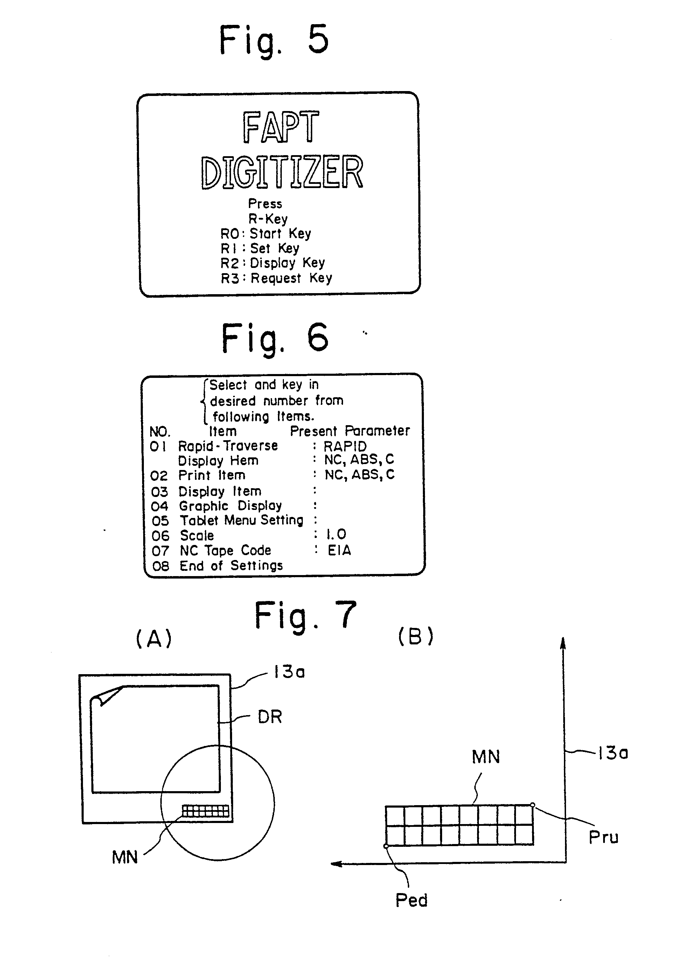

First, following the introduction of power, the operator sets the magnetic tape cassette containing the prescribed software (system program) in the magnetic tape unit 11c (Fig. 1) and touches the load button on the keyboard 11a to store the system program in a main memory incorporated within main body 11 of the system. This causes the title (e.g. FAPT DIGITIZER) of the system program, as well as a prompt calling for pressing of an R-key, to appear on the screen of the graphic display device 11b, as shown in Fig. 5.

(2) F-key setting step

The keyboard 11a includes an array of eight F-keys ($F_0$ to $F_7$) which remain locked in the on state when depressed. The operator, by setting the desired F-keys in the on (depressed) or off state, selects the operating mode of the tablet 13 as well as the output device to be used. Table I, shown below, gives the function and meaning of each F-key, as well as the associated subject matter. It should be noted that the F-keys can be set prior to the system loading step if desired.

(3) Step for setting initial conditions

TABLE I

| Key symbol | Function | Subject | Meaning |
|---|---|---|---|
| $F_0$ | Input | Test Mode | To constantly display coordinate values sensed by tablet |
| $F_1$ | " | Input Data Confirmation Mode | To confirm coordinate values sensed by tablet, and to change coordinate values when required |
| $F_2$ | Output | Output Mode | When $F_2$ is ON, to establish step feed during NC data output and enable both insertion and deletion of data |
| $F_3$ | " | CRT Characters | To display list of, e.g., NC data, on CRT |
| $F_4$ | " | CRT Graphics | To display graphically, on CRT, coordinate values entered by tablet |
| $F_5$ | " | Printer | To print out, via printer, list of results of FAPT execution |
| $F_6$ | " | Paper Tape | To punch NC command data into paper tape |
| $F_7$ | " | MT Cassette | To write NC command data into magnetic tape cassette |

After setting the F-keys, the operator sets the conditions for the preparation of an NC tape. Specifically, four ($R_0$ to $R_4$) of the abovementioned R-keys are provided on the keyboard 11a. First, the operator depresses the $R_3$ key, causing the prompt "REQUEST=" to appear at the lower left side of the CRT screen. The operator responds to the prompt by setting and entering conditions in accordance with predetermined rules, and then depresses an NL key, located on the keyboard 11a, two consecutive times. This restores the CRT screen to the display depicted in Fig. 5 and ends the condition setting processing. The conditions which can be set are, e.g., machine tool parameters, input/output units (English or metric system, etc.) and special codes. The machine tool parameters may include the name of each axis of movement (X, Y, Z...), the minimum unit set for each axis of movement, and G-function instruction codes (indicating quick feed, linear cutting feed, clockwise and counter-clockwise circular interpolation, absolute command and incremental commands, etc.).

(4) Step for setting execution conditions

Next, the operator depresses the $R_1$ key to set various conditions for system program execution. The information shown in Fig. 6 will appear on the CRT screen of the graphic display device 11b when the $R_1$ key is depressed. Now, in accordance with the conditions which are desired to be set, the operator may select one of the eight items numbered 01 to 08 shown in Fig. 6. When one of the item numbers is keyed in, a prompt appears on the display screen for each of various conditions to be set with regard to the entered item number. When the operator has successively entered the set conditions in response to the prompts, the entry of conditions with regard to the particular item number ends. The operator then depresses the NL key a number of times in succession to return the CRT screen to the display shown in Fig. 6, upon which he may set the conditions for a new item number. Table II shown below gives the meaning of each numbered item.

5

TABLE II

| No. | Item | Meaning |
|---|---|---|
| 1. | Rapid-traverse Tool Path Display | To designate whether rapid-traverse motion should be displayed |
| 2. | Print Item | Item to be printed |
| 3. | Display Item | Item to be displayed on CRT |
| 4. | Graphic Display | Scale and position of graphic displayed on CRT |
| 5. | Tablet Menu position | To designate menu position on tablet |
| 6. | Scale | To designate scale and scale reduction ratio for read coordinate values |
| 7. | NC tape code | NC tape output code |
| 8. | | End of setting operation |

In Table II, Item No. 1, designates whether rapid-traverse motion, namely the path of a tool in the rapid-traverse mode, is to be displayed. Entering "RAPID" opposite this item number will cause the path to be displayed. Item Nos. 2 and 3 are for selecting print and display items, respectively. Prescribed outputs can be printed or displayed by entering the parameters shown in the left column of Table III, included hereinbelow. In order for an output to be capable of print out or display, it is necessary that either key $F_2$ or key $F_3$ of the eight F-keys be placed in the ON state.

Item No. 5 is provided for setting a menu position (switch function zone) on the tablet. Since the tablet has the capability of identifying designated points, it can also be made to function as a switch if a portion of the tablet surface is partitioned into a plurality of areas and each area is assigned a specific meaning. For example, if a certain area is set to serve as an absolute command area, designating said area will cause the NC data creating apparatus to create NC data in the form of absolute values from then on.

TABLE III

| Parameter | Meaning |
|---|---|
| NC | To output content of created NC tape |
| ABS | To output absolute value for each axis |
| C | To output center and radius of circle during circular interpolation |
| PART | To output content of created part program |

To enter graphic data, a design drawing is laid on the tablet surface and the position of a predetermined point on the drawing is entered by designating the point. When a portion of the tablet surface (specifically a switch function zone described below) which is made to function as a switch is fixed in area or position, there will be occasions where said switch function zone of the tablet surface is covered by the design drawing diagram because of the size of the design drawing or the type of design. In such case, the tablet will not be able to discriminate whether a certain designated area on the tablet surface is a point on the design or an area which is to function as a switch. While there are also instances where the graphic itself will not overlay the switch function zone on the tablet surface, inconveniences can still be encountered because this part of the tablet surface may be covered by a blank portion of the drawing.

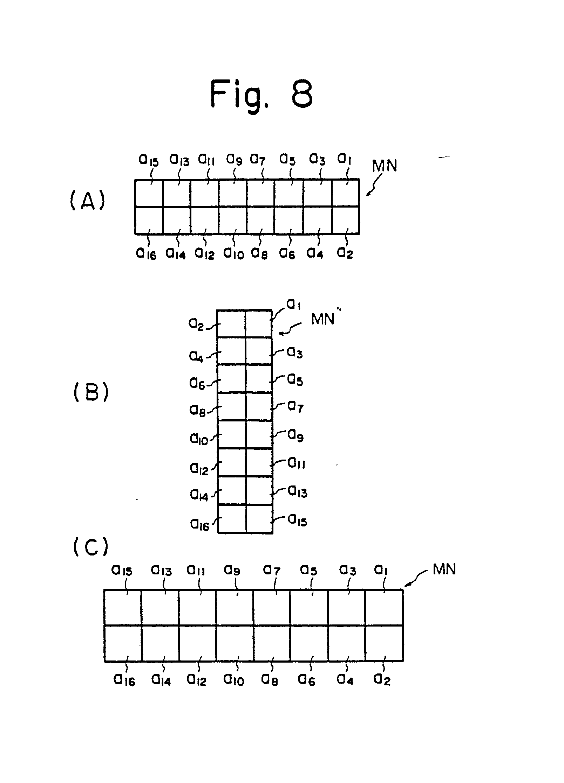

In view of the foregoing problem, and according to the present embodiment of the invention, any area on the tablet surface can be made to serve as a switch function zone through use of Item No. 5 mentioned above. This will now be described with reference to Fig. 7, which is useful in explaining how a switch function zone is set, and with reference to Fig. 8 showing examples of menu configurations for designating

6

the size of the switch function zone, the boundaries of areas $a_1$ through $a_{16}$ constituting the zone, and the meaning of each area. A menu MN, printed on, e.g., white paper or wax paper, may have a horizontal configuration composed of 16 areas $a_1$ through $a_{16}$ in a two-row by eight-column array, as depicted in Figs. 8A and 8C, or a vertical configuration composed of 16 areas $a_1$ through $a_{16}$ in an eight-row by two-column array, as shown in Fig. 8B. The size of a switch function zone depends upon the size of the menu and can be set at will. The menu MN in Fig. 8C, for example, takes up more space than the menu in Fig. 8A. The numbers of rows and columns also can be set as desired.

A switch function zone is set through the following sequence, described with reference to Fig. 7, in which (B) is an enlarged view of the portion enclosed by the circle in (A):

Initially, a drawing DR is laid on the tablet surface 13a and affixed thereto by adhesive tape or the like, after which the menu MN is similarly laid on and affixed to the tablet surface 13a, at a portion thereof not covered by the drawing DR, as shown in Fig. 7. When the operator selects Item No. 5 (Fig. 6) under these conditions, the following prompt appears on the CRT screen:

$$\text{UPPER RIGHT}=\square\,,\square$$

thereby inquiring about the position of the upper right portion of the menu MN. The operator responds by positioning the cross-hair intersection $P_c$ of the position reader, provided on the cursor unit 13c (Fig. 3), at the upper right corner $P_{ru}$ of the menu MN, shown in Fig. 7B, followed by depressing one of the switches SW1, SW2. This causes the X, Y coordinates $(X_1, Y_1)$ of the point $P_{ru}$ to be fed into the system. Next, the following prompt is displayed:

$$\text{LOWER LEFT}=\square\,,\square$$

calling for the entry of the point $P_{ed}$ at the lower left corner of the menu MN. As described above, the operator now places the cross-hair intersection $P_c$ of the cursor unit 13c at the point $P_{ed}$ and depresses one of the switches SW1, SW2 to enter the X, Y coordinates $(X_2, Y_2)$ of the point $P_{ed}$.

Distance x along the X axis and distance y along the Y-axis are expressed by the following, respectively:

$$x=X_1-X_2,\ y=Y_1-Y_2 \tag{1}$$

Accordingly, the menu will be of the horizontal type if $x\geq y$ holds, and of the vertical type if $x<y$ holds. Thus the type of menu is decided by the magnitudes of x, y. If a horizontal menu is set in advance to have two rows and eight columns and a vertical menu is set in advance to have eight rows and two columns, by way of example, then, in the case of Fig. 7, $x>y$ will hold (horizontal menu), and the horizontal and vertical dimensions x', y', respectively, of each area will be:

$$x'=(X_1-X_2)/8,\ y'=(Y_1-Y_2)/8 \tag{2}$$

thereby specifying the boundaries of the areas $a_1$ through $a_{16}$. This ends the processing for setting an information input zone.

Returning to Table II, Item No. 6 is for designating scale and paper reduction ratio for read coordinate values. Generally, an object shown on a drawing is not drawn to actual size, e.g., small objects are drawn large and large objects small. Also, depending upon the paper used, paper length and width may enlarge or contract on the order of several percent during copying. Many copying machines, moreover, have a magnification and reduction function for magnifying or reducing the information appearing on the drawing. The shape of an object appearing on a drawing must therefore be processed in accordance with the actual size of the object.

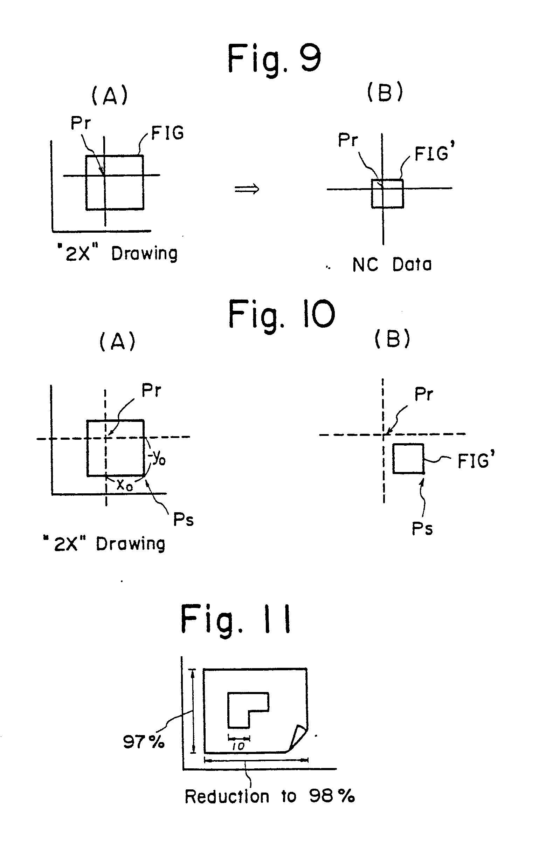

To this end, the operator selects Item No. 6 (Fig. 6), whereupon the inquiry "SCALE=" appears on the CRT screen, calling for the entry of scale. The operator responds by entering the magnification shown on the drawing. For example, if the drawing states a magnification of "2×", then the operator enters "2.0" from the keyboard. Note that the point adopted as the center of the scale is that used when the origin, or reference point, of the NC data coordinate system is designated. Said point is entered by the cursor unit. Figs. 9 and 10 are useful in describing the center of the scale. Assume that a point Pr on a drawing specifying a magnification of "2×" (Fig. 9A) is to be taken as the reference point of the NC data coordinate system. The operator, taking the cursor unit 13c (Fig. 3) in hand, aligns the cross-hair intersection Pc of the position reader PR with the point Pr and then presses either the first switch SW1 or second switch SW2 to enter Pc as the coordinate system reference point. The operator also enters the scale, which is "2.0" in the present case, and thenceforth enters each point that is specified on the drawing. The shape specified in this fashion, denoted FIG in Fig. 9A, is interpreted by the NC data creating apparatus as being the shape FIG' shown in Fig. 9B. In other words, in the example of Fig. 9, the system takes the point Pr as the center of the scale.

Next, assume that the point Pr on the drawing specifying a magnification of "2×" is to be taken as the reference point of the NC data coordinate system, but that a point Ps is used to enter the point Pr, as shown in Fig. 9A. In this case, point Ps become the center of the scale. The operator, taking the cursor unit 13c (Fig. 3) in hand, now aligns the cross-hair intersection Pc of the position reader PR with the point Ps and then presses either the first switch SW1 or second switch SW2 to enter the coordinates of said point, which is a point in the tablet coordinate system. Next, using the keyboard, the operator enters the displacements along the X and Y axes (namely $x_o$, $-y_o$) from the point Ps to the reference point Pr of the NC data coordinate system to specify the point Pr. This establishes point Ps as the center of the scale. The result is that the graphic FIG of Fig. 10A, entered from the drawing specifying a magnification of "2X", is interpreted by the NC data creating apparatus as being the shape FIG' shown in Fig. 10B. In other words, in the example of Fig. 10, the positional relation of Ps with respect to Pr is the same in both A and B.

After the operator enters the scale, an inquiry appears on the CRT screen regarding reduction ratio with respect to the horizontal and vertical axes of the tablet coordinate system. The operator responds by entering a percentage which takes into consideration either or both of the rate of change (%) in the drawing dimensions owing to expansion or shrinkage of the paper, or the copying magnification. For example, the following prompts will appear on the screen of the CRT:

"X-AXIS REDUCTION RATIO="
"Y-AXIS REDUCTION RATIO="

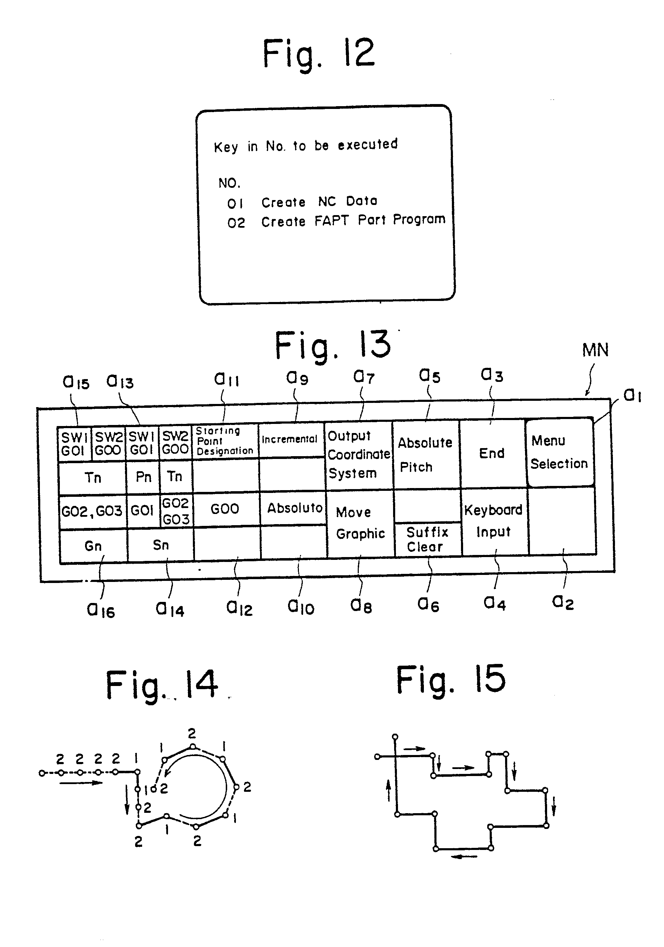

in response to which the operator enters, say, 98% and 97%, respectively, assuming that these figures are indicative of the reduction to 98% and 97% along the horizontal and vertical axes, as illustrated in Fig. 11. The NC data creating apparatus therefore reads in 98% and 97% as the reduction ratios, so that a subsequently entered graphic will undergo a size reduction to 98% along the horizontal axis and 97% along the vertical axis.

Again returning to Table II, Item No. 7 is for entering an NC tape output code, allowing selection and entry of either an EIA code or ISO code.

(5) Coordinate value input step

When the condition setting processing for execution of the system program is completed by the foregoing operations, the system is ready to accept entry of various data for NC tape preparation. It should be noted that the display of Fig. 5 reappears on the CRT with the conclusion of processing in step (4) (i.e., by entering Item No. 8). The operator now touches key $R_o$ on keyboard 11a to initiate processing in accordance with the system program. More specifically, with a touch of key $R_o$, the CRT displays a prompt calling for either NC data (NC tape) creation or part program creation, as shown in Fig. 12. The operator enters "01" to execute processing for the creation of NC data, or "02" to execute processing for the creation of a part program. The following discussion will deal with selection of "01", namely NC data creation.

Next, the operator enters various data for NC data creation. Such data may consist of (a) mode data such as point mode, linear cutting mode and circular arc cutting mode, and (b) point data relating to points on a drawing. The mode data is entered by designating, through use of the cursor unit, a predetermined area on the switch function zone established in step (4).

Fig. 13 illustrates the details of a horizontal-type menu MN used in setting a switch function zone, in which each area is assigned boundary lines and as well as a particular meaning. The areas $a_{12}$, $a_{13}$, $a_{14}$, $a_{15}$, $a_{16}$ are mode selection areas. Area $a_1$ is a menu selection area which must always be designated before selecting a new mode. The areas $a_{12}$, $a_{13}$ are areas for designating a point mode, and the areas $a_{14}$, $a_{16}$ are for designating linear and circular arc cutting modes.

The point mode is a mode in which points are entered one at a time to create cutting-feed/rapid-traverse NC data. Selecting the point mode makes it possible to enter points from a drawing by using the tablet. In other words, assume that the operator selects area $a_{12}$ or $a_{13}$ to establish the point mode, places the cross-hair intersection $P_c$ of the cursor unit 13c on prescribed position on the tablet surface and presses the first switch SW1 or second switch SW2 (Fig. 3). This will create an item of NC data for rapid-traverse or cutting-feed movement from the previous position to the just indicated position. When the operator restores switch SW1 or switch SW2 to the original position, moves the cursor unit to another position on the design drawing and then again presses switch SW1 or switch SW2, this creates an item of rapid-traverse or cutting-feed NC data for movement up to said position. By repeating this operation, the operator may enter successively an item of cutting-feed/rapid-traverse data with respect to each separately entered position (i.e., the coordinate values of the position). Note that when area $a_{12}$ is selected, an item of rapid-traverse NC data is created regardless of which of the first and second switches SW1, SW2 is pressed. When area $a_{13}$ is selected, however, an item of cutting-feed NC data is created when switch SW1 is pressed, and an item of rapid-traverse NC data when switch SW2 is pressed.

Fig. 14 shows an example of a graphic which is entered in the point mode by selecting area $a_{13}$ and designating a series of points on a drawing one after another using the cursor unit while selectively pressing switch SW1 or SW2 at each point. In Fig. 14, the dotted lines indicate the creaction of NC data for rapid-traverse, while the solid lines indicate the creation of NC data for linear cutting. Each numerical value "1" indicates when the first switch SW1 was pressed, and each numerical value "2" shows when the second switch SW2 was pressed.

As opposed to the point mode, the cutting mode is one in which an item of linear cutting data or

8

circular arc cutting data is created on the basis of each successively entered point (coordinate values). Selecting the cutting mode of operation makes it possible to enter points from a drawing by using the tablet 13a. The following will serve as examples:

(a) To create NC data for linear cutting: The operator selects area $a_{14}$, aligns the cross-hair intersection $P_c$ of the cursor unit 13c with a prescribed position on the tablet 13a and presses switch SW1. This causes the creation of an item of linear cutting data for movement from the immediately preceding position designated by the cursor unit 13c to the newly designated position. If the operator then moves the cursor unit 13c to another position on the tablet surface and presses switch SW1, then this will again produce an output of linear cutting data for movement to said position. Repeating this operation will create NC data for cutting a workpiece by causing a tool to move along a contour of the kind shown in Fig. 15.

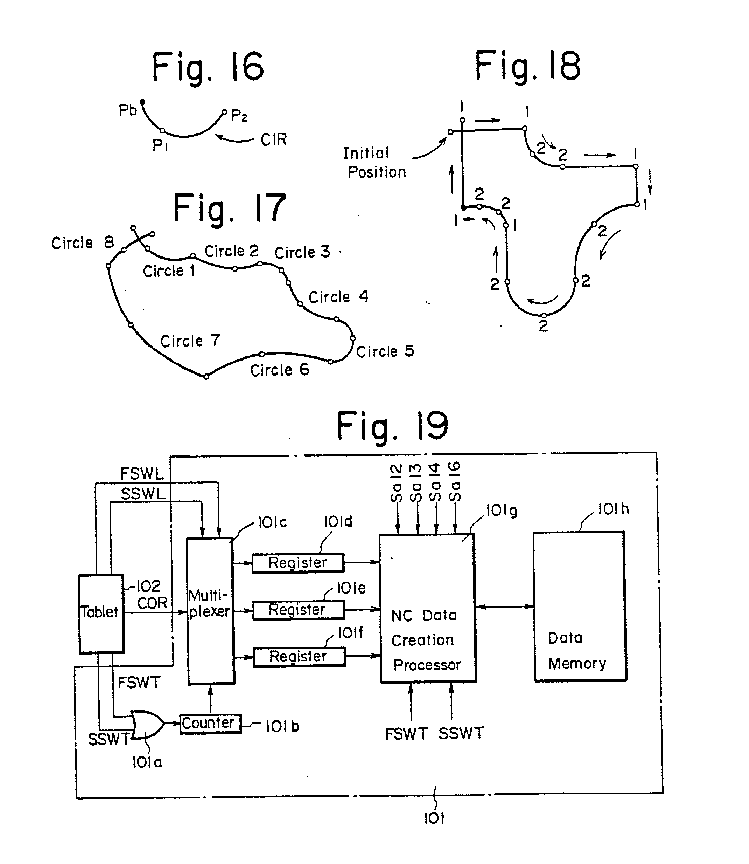

(b) To create NC data cutting circular arcs: The operator selects area $a_{14}$, aligns the cross-hair intersection $P_c$ of the cursor unit 13c with a prescribed position P1 (Fig. 16) on the tablet 13a, presses switch SW2, moves the cursor unit 13c to another position p2 on the tablet and again presses switch S2. The entry of the abovementioned two points forms a circular arc CIR from an immediately preceding point Pb and the two newly entered points P1, P2, thereby creating NC data for circular interpolation. By repeating the above operation, the operator creates successive items of NC data for interpolating circular arcs connected as shown in Fig. 17. The selected arcs each pass through three points. Whether an arc is a clockwise or counter-clockwise arc is determined automatically by the points entered. If area $a_{16}$ is selected, then circular arc cutting data will be created regardless of whether switch S1 or S2 is pressed.

(c) To create NC data for mixed linear and arc cutting by combining operations (a) and (b): Fig. 18 illustrates a shape based on NC data for mixed linear and arc cutting, created by selecting area $a_{14}$ and combining operations (a) and (b). In Fig. 18, each numeral "1" indicates when the switch SW1 was pressed after aligning the cross-hair intersection $P_c$ of the cursor unit with the corresponding point. Likewise, each numeral "2" indicates when the switch SW2 was pressed after aligning the cross-hair intersection $P_c$ of the cursor unit with the corresponding point.

A block diagram illustrating an apparatus for creating NC data in accordance with the present invention is illustrated in Fig. 19. The apparatus, designated at 101, and a tablet designated at 102, are arranged in the manner shown in Figs. 2 and 3. The apparatus 101 for creating NC data comprises an OR gate 101a for taking the OR of signals FSWT, SSWT produced at the trailing edges of respective switch signals issued by the first and second switches SW1, SW2 of the cursor unit when they are pressed, a ternary counter 101b for counting the pulses (logical "1") produced by the OR gate 101a, the counter assuming states "00" (0), "01" (1), "10" (2), "00" (0)... and so on, in the order mentioned, a multiplexer 101c, first, second and third registers 101d, 101e, 101f, the multiplexer applying coordinates values COR, received from the tablet 102, to the registers 101d through 101f in sequential fashion in accordance with the status of the counter 101b, whereby the coordinates are stored in the designated register, a processor 101g for creating NC data, and a data memory 101h for storing the created NC data. The coordinates COR from the tablet 102 are stored in register 101d when the status of counter 101b is (0), in register 101e for state (1), and in register 101f for state (2).

Described next will be the creation of NC data in both the point and cutting modes.

When the operator selects area $a_{12}$ (Fig. 13) of the switch function zone set on the surface of the tablet, a first point mode signal $Sa_{12}$ (logical "1") enters the NC data creating processor 101g. When coordinate values arrive from the tablet 102, therefore, NC data created from then on will be data for rapid traverse (G00). For example, if the operator takes the cursor unit, aligns the cross-hair intersection Pc with a prescribed position on the drawing and presses the first switch SW1 or second switch SW2 (Fig. 3) under initial conditions (namely when the status of counter 101b is 1 and the content of register 101d is zero), then the coordinates $(X_1, Y_1)$ of the designated position will be stored in the second register 101d via the multiplexer 101c in response to a signal FSWL or SSWL produced at the leading edge of the first switch signal SW1 or second switch SW2. When the operator restores the switch SW1 or SW2 to the off position, causing the corresponding switch signal to fall, the trailing edge signal FSWT or SSWT is generated to increment the counter 101g to a numerical value "2", and is applied to the NC data creating processor 101g. Using the content (initially zero) of the first register 101d and the contents $X_1$, $Y_1$ of the second register 101e, the processor 101g computes incremental values $\Delta X_1(=X_1)$, $\Delta Y_1(=Y_1)$ along the X and Y axes, respectively, and thereafter creates NC data given by:

$$G00X\Delta X_1, \ Y\Delta Y_1*$$

the latter being stored at the first address of the data memory 101h.

Next, the operator moves the cross-hair intersection Pc of the cursor unit to another position and presses the first switch SW1 or second switch SW2, causing the coordinates $(X_2, Y_2)$ of the position to be stored in the third register 101f. Thereafter, as described above, signal FSWT or SSWT is generated to restore the status of counter 101b to zero, and the processor 101g uses the contents of the second register 101e and of the third register 101f to perform the operations:

$$X_2-X_1 \rightarrow \Delta X_2, \ Y_2-Y_1 \rightarrow \Delta Y_2$$

9

**0 087 949**

thereby deriving the incremental values $\Delta X_2$, $\Delta Y_2$. The processor 101g then creates data represented by:

$$G00X\Delta X_2, Y\Delta Y_2*$$

and stores the data in the second address of the data memory 101h.

The foregoing processing steps are repeated to create the desired rapid-traverse NC data and to store the data in the data memory 101h. It should be noted that while the foregoing deals with the creation of NC data based on incremental values, NC data based on absolute values can also be created. Using the switch function zone shown in Fig. 13, the operator may designate incremental values by selecting area $a_9$, and absolute values by designating area $a_{10}$.

Now assume that the operator selects area $a_{13}$ of the switch function zone. This causes a second point mode signal $Sa_{13}$ (logical "1") to enter the processor 101g for the creation of NC data. Consequently, when the operator presses the first switch SW1 and coordinate values enter the processor 101g, the latter creates NC data for linear cutting (G01). If the second switch SW2 is pressed to enter the coordinate values, then the processor 101g creates NC data for rapid traverse (G00). It should be noted that the method in which the processor 101g creates NC data when the area $a_{13}$ is selected is almost the same as when the area $a_{12}$ is selected. The only difference is that cutting data or rapid-traverse data will be created depending upon whether switch SW1 or SW2 is pressed.

The foregoing relates to the point mode of operation. When the operator selects area $a_{14}$ on the switch function zone, a cutting mode signal $Sa_{14}$ (logical "1") is fed into the processor 101g for the creation of NC data. Consequently, when the operator presses the first switch SW1 and coordinate values enter the processor 101g, the latter creates NC data for linear cutting (G01). If the second switch SW2 is pressed to enter the coordinate values, then the processor 101g creates NC data for circular arc cutting (G02, G03). For example, if the operator takes the cursor unit, aligns the cross-hair intersection Pc with a prescribed position on the drawing and presses the first switch SW1 under initial conditions (namely when the status of counter 101b is 1 and the content of register 101d is $X_1$, $Y_1$), then the coordinates $(X_2, Y_2)$ of the designated position will be stored in the second register 101d via the multiplexer 101c in response to a signal FSWL produced at the leading edge of the first switch signal SW1. When the operator restores the switch SW1 to the off position, causing the corresponding switch signal to fall, the trailing edge signal FSWT is generated to increment the counter 101g to numerical value "2", and is applied to the NC data creating processor 101g. Using the content $(X_1, Y_1)$ of the first register 101d and the contents $X_2$, $Y_2$ of the second register 101e, the processor 101g computes incremental values $\Delta X_2$ $(=X_2-X_1)$, $\Delta Y_2$ $(=Y_2-Y_1)$ along the X and Y axes, respectively, and thereafter creates NC data given by:

$$G01X\Delta X_2, Y\Delta Y_2*$$

the latter being stored at a predetermined location of the data memory 101h. From then on the same processing will take place each time coordinate values are entered by pressing the first switch SW1, thereby creating data for linear cutting.

For circular arc cutting, the operator presses the second switch SW2 to feed the coordinates $(X_1, Y_2)$, $(X_3, Y_3)$ of two points on a drawing into the second register 101e and third register 101f, respectively, with the content of the first register 101d being $(X_1, Y_1)$. Now the processor 101g creates NC data for the interpolation of circular arcs passing through the three points indicated by the coordinate values stored in each of the first, second and third registers 101d, 101e, 101f. The processor stores the data in the data memory 101h. Thereafter, each time the operator presses the switch SW2 two times in succession, data for circular arc cutting will be created through the foregoing processing whenever the two sets of coordinate value are received by the processor 101g. It should be noted that linear and circular arc cutting data can be mixed by pressing the first and second switches SW1, SW2 in a combination decided by the design drawing. Also, by entering coordinates through a combination of the point and cutting modes, it is possible to create NC data which include positioning (rapid-traverse) data, linear cutting data and circular arc cutting data. Although the NC data created in the above-described fashion does not include M-, T- and S-function instructions, these can be inserted by entering them from, e.g., the keyboard, or later by such editing processing as correction and addition processing.

(6) Recording step

The foregoing steps create NC data and store the data in the data memory 101h. The next step is to preserve the items of created data by reading them out of the data memory and either punching them into a paper tape by way of the tape puncher or by recording them on magnetic tape.

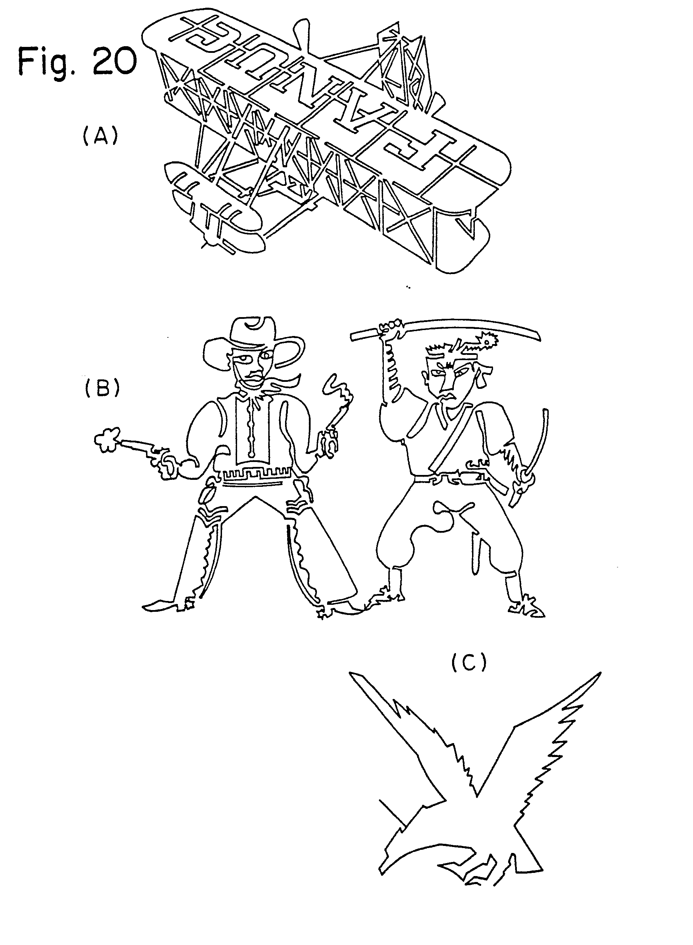

Figs. 20A through 20C show examples of drawings which can be produced in accordance with the present invention by driving a pen based on NC data created by using the tablet to enter data indicative of prescribed points. The time required for the creation of the NC data representing the various graphics was 12 min. for Fig. 20A, 20 min. for Fig. 20B and 5 min. for Fig. 20C.

In accordance with the present embodiment of the invention as described and illustrated hereinabove, NC data can be created in a simple and rapid manner without requiring special skills merely be designating the mode data and the desired points on a design drawing placed on the tablet. Though the precision of the

10

data entered by the tablet declines somewhat, there are many instances where highly accurate machining is unnecessary. The embodiment of the invention is well-suited to the creation of NC data representing contours that are machined in such fashion. In addition, coordinate values can be entered directly merely by designating desired points on a design drawing, even if dimensions and the like are not indicated on the drawing. Furthermore, an embodiment of the invention may dispense with the need to create part programs.

There is disclosed a method and apparatus for creating numerical control data by entering coordinates which specify points on a drawing DR placed on a tablet 13a. The method includes entering coordinate values of points on the drawing DR by designating the points, and entering information for specifying the category of numerical control data to be specified. Numerical control data is created using the classification information and the coordinates of the points. The data can be created simply in a short period of time without requiring special skills.

## Claims

1. A method of creating numerical control data involving the input of graphic data using a digitising tablet and involving the input of mode information, the numerical control data being created by using said mode information and said graphic data, characterised by the steps of:

(a) placing a drawing on said tablet (13a);

(b) designating points on said drawing and generating, and entering, the coordinate values of said points together with signals (SSWT, FSWT) indicating that the coordinates of said points have been entered;

(c) designating a predetermined switch function area of any location on said tablet;

(d) generating and entering mode information by means of said area specifying particular subsets of numerical control data to be provided from a sequence of the coordinate values; and

(e) creating said numerical control data from said mode information and said coordinate values entered, wherein said signals (SSWT, FSWT) are employed to store said coordinate values by:

(f) taking the logical sum of said signals (SSWT, FSWT) to produce output pulses;

(g) counting said output pulses;

(h) sequentially entering and storing said coordinate values in accordance with the counted value; and (i) storing said numerical control data created. .

2. The method according to claim 1, wherein said mode information is indicative of definition statements defining points, point sequences, straight lines and circular arcs.

3. An apparatus for creating numerical control data according to the method claimed in claim 1 comprising:

(a) tablet means (13a) for placing a drawing thereon and means for inputting mode information; characterised by:

(b) coordinate designating means (13c) associated with said tablet means (13a) for designating points on said drawing, said coordinate designating means (13c) including switch means (SW1, SW2) for generating and entering signals (SSWT, FSWT) indicating that the coordinate values of said points have been entered;

(c) means (MN) laid on the tablet and providing a switch function area associated with said coordinate designating means (13c) for generating and entering mode information specifying particular subsets of control data to be provided from a sequence of the coordinate values of said points;

(d) processor means (101g) to receive said mode information and the coordinate values of said points and said signals (SSWT, FSWT) for creating said numerical control data from the same,

(e) logical gate means (101a) for forming the logical sum of said signals to produce output pulses;

(f) counting means (101b) for counting said output pulses and having its status changed with each of its counted pulses;

(g) a plurality of storage means (101d, e, f) for storing said coordinate values sequentially in accordance with the counted value of said counting means (101b);

(h) coordinate value entering means (101c) for entering said coordinate values sequentially in said plurality of storage means (101d, e, f); and

(i) data memory means (101h) for storing said numerical control data created.

4. The apparatus according to claim 3, wherein said coordinate designating means (13c) comprises a cursor unit having a position reader which is a cross-hair arrangement for having its intersection aligned with a desired point on said drawing for entering said coordinate values.

5. The apparatus according to claim 3, wherein said coordinate designating means comprises a stylus pen (13d) for entering said coordinate values.

6. The apparatus according to any of the preceding claims 3 to 5, wherein said counting means (101b) is of the ternary type for assuming three statuses.

7. The apparatus according to claim 6, wherein said storage means (101d, e, f) include three registers.

8. The apparatus according to any of claims 3 to 7, wherein said coordinate value entering means (101c) comprises a multiplexer.

**0 087 949**

**Patentansprüche**

1. Verfahren zum Erzeugen von numerischen Kontrolldaten mit darin einbegriffener Eingabe von graphischen Daten unter Benutzung einer Digitalisierungs-Tafel und darin einbegriffener Eingabe von Betriebsartinformation, wobei die numerischen Kontrolldaten durch Verwendung der Betriebsartinformation und der graphischen Daten erzeugt werden, gekennzeichnet durch Schritte zum

(a) Plazieren einer Zeichnung auf der Tafel (13a),

(b) Bezeichnen von Punkten in der Zeichnung und Erzeugen und Eingeben der Koodinatenwerte der Punkte zusammen mit Signalen (SSWT, FSWT), die anzeigen, daß die Koordinaten der Punkte eingegeben worden sind,

(c) Bezeichnen eines vorbestimmten Schaftfunktions-Bereichs eines beliebigen Orts auf der Tafel,

(d) Erzeugen und Eingeben von Betriebsartinformation mittels des Bereichs, die besondere Unterabschnitte von numerischen Kontrolldaten spezifiziert, welche aus einer Folge der Koordinatenwerte zu erzeugen sind, und

(e) Erzeugen der numerischen Kontrolldaten aus der Betriebsartinformation und den Koordinatenwerten, die eingegeben wurden,

wobei die Signale (SSWT, FSWT) benutzt werden, um die Koordinatenwerte zu speichern durch

(f) Zuhilfenahme der logischen Summe der Signale (SSWT, FSWT), um Ausgangsimpulse zu erzeugen,

(g) Zählen der Ausgangsimpulse,

(h) Sequentielles Eingeben und Speichern der Koordinatenwerte in Übereinstimmung mit dem gezählten Wert und

(i) Speichern der numerischen Kontrolldaten, die erzeugt wurden.

2. Verfahren nach Anspruch 1, bei dem die Betriebsartinformation bezeichnend für Definitionsanweisungen ist, die Punkte, Punktfolgen, gerade Linien und Kreisbögen definieren.

3. Vorrichtung zum Erzeugen von numerischen Kontrolldaten gemäß dem Verfahren nach Anspruch 1, mit

(a) einer Tafel (13a) zum Plazieren einer Zeichnung darauf und Mitteln zum Eingeben von Betriebsartinformation gekennzeichnet durch

(b) ein Koordinatenbezeichnungsmittel (13c), das der Tafel (13a) zugeordnet ist, zum Bezeichnen von Punkten in der Zeichnung, wobei das Koordinatenbezeichnungsmittel (13c) Schaltmittel (SW1, SW2) zum Erzeugen und Eingeben von Signalen (SSWT, FSWT) enthält, die angeben, daß Koordinatenwerte der Punkte eingegeben worden sind,

(c) einem Mittel (MN), das auf die Tafel gelegt wird und einen Schaltfunktions-Bereich schafft, welcher dem Koordinatenbezeichnungsmittel zugeordnet ist, zum Erzeugen und Eingeben von Betriebsartinformation, die besondere Unterabschnitte der Kontrolldaten spezifiziert, welche aus einer Folge von Koordinatenwerten der Punkte bereitzustellen sind,

(d) einem Prozessor (101g) zum Aufnehmen der Betriebsartinformation und der Koordinatenwerte der Punkte und der Signale (SSWT, FSWT) zum Erzeugen der numerischen Kontrolldaten aus denselben,

(e) einem logischen Gatter (101a) zum Bilden der logischen Summe der Signale, um Ausgangsimpulse zu erzeugen,

(f) einem Zählmittel (101b) zum Zählen der Ausgangsimpulse, dessen Zusand mit jedem der gezählten Impulse geändert wird,

(g) einer Vielzahl von Speichermitteln (101d, e, f) zum sequentiellen Speichern der Koordinatenwerte in Übereinstimmung mit dem Zählstand des Zählmittels (101b),

(h) einem Koordinatenwert-Eingabemittel (101c) zum sequentiellen Eingeben der Koordinatenwerte in die Vielzahl von Speichermitteln (101d, e, f) und

(i) einem Datenspeichermittel (101h) zum Speichern der erzeugten numerischen Kontrolldaten.

4. Vorrichtung nach Anspruch 3, bei der das Koordinatenbezeichnungsmittel (13c) aus einer Positionsanzeigereinheit besteht, die einen Positionsleser hat, der eine Fadenkreuz-Anordnung ist, die in Deckung mit einem gewünschten Punkt in der Zeichnung zum Eingeben der Koordinatenwerte zu bringen ist.

5. Vorrichtung nach Anspruch 3, bei der das Koordinatenbezeichnungsmittel aus einem Griffel (13d) zum Eingeben der Koordinatenwerte besteht.

6. Vorrichtung nach einem der Ansprüche 3 bis 5, bei der das Zählmittel (101b) vonm Ternärtyp ist, der drei Zustände annehmen kann.

7. Vorrichtung nach Anspruch 6, bei der die Speichermittel (101d, e, f) drei Register enthalten.

8. Vorrichtung nach einem der Ansprüche 3 bis 7, bei der das Koordinaten-Eingabemittel (101c) einen Multiplexer aufweist.

**Revendications**

1. Un procédé de création de données de commande numérique impliquant l'entrée de données graphiques, au moyen d'une tablette de numérisation et impliquant l'entrée d'informations de mode, les données de commande numérique étant créées en utilisant lesdites informations de mode et lesdites données graphiques, caractérisé par les opérations suivantes:

12

**0 087 949**

(a) installation d'un plan sur ladite tablette (13a);

(b) désignation des points dudit dessin et génération, puis entrée des valeurs de coordonnées desdits points en même temps que des signaux (SSWT, FSWT) indiquant que les coordonnées desdits points ont été entrées;

(c) désignation d'un secteur à fonction de commutation prédéterminé d'un emplacement quelconque de ladite tablette;

(d) génération et entrée des informations de mode au moyen desdits sous-ensembles de données de commande numérique particuliers spécifiant ledit secteur pour être créées à partir d'une séquence de valeurs de coordonnées; et

(e) création desdites données de commande numérique à partir desdites informations de mode et desdites valeurs de coordonnées entrées,

dans lequel lesdits signaux (SSWT, FSWT) sont employés dans le but de mettre en mémoire lesdites valeurs de coordonnées en:

(f) effectuant la somme logique desdits signaux (SSWT, FSWT) pour former des impulsions de sortie;

(g) comptant lesdites impulsions de sortie;

(h) entrant et stockant séquentiellement lesdites valeurs de coordonnées selon la valeur comptée; et

(i) stockant lesdites données de commande numérique ainsi créées.

2. Le procédé selon la revendication 1, dans lequel lesdites informations de mode indiquent les instructions de définition des points, les séquences de points, les lignes droites et les arcs de cercle.

3. Un appareil pour la création de données de commande numérique selon le procédé de la revendication 1, comprenant:

(a) des moyens de tablette (13a) destinés à recevoir un dessin et des moyens d'introduction des informations de mode; caractérisé par:

(b) des moyens de désignation des coordonnées (13c) associés auxdits moyens de tablette (13a) pour désigner des points dudit dessin, lesdits moyens de désignation de coordonnées (13c) comprenant des moyens formant commutateurs (SW1, SW2) pour générer et entrer des signaux (SSWT, FSWT) indiquant que les valeurs des coordonnées desdits points ont été entrées;

(c) des moyens (MN) placés sur la tablette et créant un secteur à fonction de commutation associé auxdits moyens de désignation des coordonnées (13c) pour générer et entrer les informations de mode spécifiant des sous-ensembles particuliers de données de commande à créer à partir d'une séquence de valeurs de coordonnées desdits points;

(d) des moyens de processeur (101g) pour recevoir lesdites informations de mode et les valeurs de coordonnées desdits points et desdits signaux (SSWT, FSWT) afin de créer lesdites données de commande numérique à partir de ceux-ci,

(e) des moyens de portes logiques (101a) pour effectuer la somme logique desdits signaux et former des impulsions de sortie;

(f) des moyens de comptage (101b) pour compter lesdites impulsions de sortie et dont l'état est changé à chacune des impulsions comptées.

(g) un ensemble moyens de stockage (101d, e, f) pour le stockage desdites valeurs de coordonnées de manière séquentielle, en fonction de la valeur comptée par lesdits moyens de comptage (101b);

(h) des moyens d'entrée des valeurs de coordonnées (101c) pour entrer lesdites valeurs de coordonnées, de manière séquentielle, dans ledit ensemble de moyens de stockage (101d, e, f); et

(i) des moyens de mémoire de données (101b) pour stocker lesdites données de commande numérique créées.

4. L'appareil selon la revendication 3, dans lequel lesdits moyens de désignation de coordonnées (13c) comprennent une unité à curseur comportant un lecteur de position qui est un montage à réticule dont l'intersection doit être alignée avec un point désiré dudit dessin pour entrer lesdites valeurs de coordonnées.

5. L'appareil selon la revendication 3, dans lequel lesdits moyens de désignation des coordonnées comprennent un stylet (13d) afin d'entrer lesdites valeurs de coordonnées.

6. L'appareil selon l'une quelconque des revendications 3 à 5 précédentes, dans lequel lesdits moyens de comptage (101b) sont du type ternaire susceptible de prendre trois états.

7. L'appareil selon la revendication 6, dans lequel lesdits moyens de stockage (101d, e, f) comprennent trois registres.

8. L'appareil selon l'une quelconque des revendications 3 à 7, dans lequel lesdits moyens d'entrée des valeurs de coordonnées (101c) comprennent un multiplexeur.

13

# Fig. 1

# Fig. 2

# Fig. 4

```
              ┌─────────┐
              │  START  │
              └────┬────┘
                   │
     ┌─────────────────────────┐
     │  Load System Program    │
     └─────────────────────────┘
                   │
     ┌─────────────────────────┐
     │      Set  F  Keys       │
     └─────────────────────────┘
                   │
     ┌─────────────────────────┐
     │    Set  Conditions      │
     │      ( Key  R3 )        │
     └─────────────────────────┘
                   │
     ┌─────────────────────────┐
     │ Set Conditions (Key R1) │
     │  for System Program     │
     │  Execution              │
     └─────────────────────────┘
                   │
     ┌─────────────────────────┐
     │ Execute FAPT ( Key Ro ) │
     │  ┌────────────────────┐ │
     │  │ Set Conditions from│ │
     │  │ Tablet  Menu       │ │
     │  └────────────────────┘ │
     │  ┌────────────────────┐ │
     │  │ Read Drawing       │ │
     │  │ Point Mode         │ │
     │  │ Cutting Mode       │ │
     │  │ Continuous Mode,etc│ │
     │  └────────────────────┘ │
     └─────────────────────────┘
                   │
     ┌─────────────────────────┐
     │ Edit/Output NC Data     │
     │ Stored in Memory        │
     │ ( Key R2 )              │
     └─────────────────────────┘
   New Drawing     │
              ┌─────────┐
              │   END   │
              └─────────┘
```

Keyboard

# Fig. 3

Pc
RFP
13C
CSB
SW1
SW2
CNT
CBL

# Fig. 5

FAPT
DIGITIZER

Press
R-Key
RO: Start Key
RI: Set Key
R2: Display Key
R3: Request Key

# Fig. 6

Select and key in
desired number from
following Items.

| NO. | Item | Present Parameter |
|---|---|---|
| 01 | Rapid-Traverse | : RAPID |
| | Display Item | : NC, ABS, C |
| 02 | Print Item | : NC, ABS, C |
| 03 | Display Item | : |
| 04 | Graphic Display | : |
| 05 | Tablet Menu Setting | : |
| 06 | Scale | : 1.0 |
| 07 | NC Tape Code | : EIA |
| 08 | End of Settings | |

# Fig. 7

(A)          (B)

13a
DR
MN

13a
MN
Pru
Ped

3

# Fig. 8

(A)

$a_{15}$ $a_{13}$ $a_{11}$ $a_9$ $a_7$ $a_5$ $a_3$ $a_1$ — MN

$a_{16}$ $a_{14}$ $a_{12}$ $a_{10}$ $a_8$ $a_6$ $a_4$ $a_2$

(B)

$a_1$ MN

$a_2$

$a_4$ — $a_3$

$a_6$ — $a_5$

$a_8$ — $a_7$

$a_{10}$ — $a_9$

$a_{12}$ — $a_{11}$

$a_{14}$ — $a_{13}$

$a_{16}$ — $a_{15}$

(C)

$a_{15}$ $a_{13}$ $a_{11}$ $a_9$ $a_7$ $a_5$ $a_3$ $a_1$ — MN

$a_{16}$ $a_{14}$ $a_{12}$ $a_{10}$ $a_8$ $a_6$ $a_4$ $a_2$

# Fig. 9

(A)

Pr    FIG

"2X" Drawing

⇒

(B)

Pr    FIG'

NC Data

# Fig. 10

(A)

Pr

$-y_0$

$x_0$

Ps

"2X" Drawing

(B)

Pr

FIG'

Ps

# Fig. 11

97%

Reduction to 98%

# Fig. 12

Key in No. to be executed

NO.
01  Create  NC Data
02  Create  FAPT Part Program

# Fig. 13

MN

$a_{15}$  $a_{13}$  $a_{11}$  $a_9$  $a_7$  $a_5$  $a_3$  $a_1$

| SW1 GO1 | SW2 GOO | SW1 GO1 | SW2 GOO | Starting Point Designation | Incremental | Output Coordinate System | Absolute Pitch | End | Menu Selection |
|---|---|---|---|---|---|---|---|---|---|
| Tn | | Pn | Tn | | | | | | |
| GO2, GO3 | | GO1 | GO2 GO3 | GOO | Absoluto | Move Graphic | | Keyboard Input | |
| Gn | | Sn | | | | | Suffix Clear | | |

$a_{16}$  $a_{14}$  $a_{12}$  $a_{10}$  $a_8$  $a_6$  $a_4$  $a_2$

# Fig. 14

# Fig. 15

# Fig. 16

# Fig. 17

Circle 8
Circle 1   Circle 2   Circle 3
Circle 4
Circle 7
Circle 5
Circle 6

# Fig. 18

Initial
Position

# Fig. 19

FSWL
SSWL

Tablet    102 COR    Multi-plexer    101c    101d    Sa12 Sa13 Sa14 Sa16    101g    101h

Register

101e

Register    NC Data    Data
Creation    Memory
Processor

101f

Register

FSWT

SSWT    Counter    101b    FSWT  SSWT

101a

101

7

Fig. 20

(A)

(B)

(C)